# EUROPEAN PATENT SPECIFICATION

(11) **EP 4 387 794 B1**
(45) Date of publication and mention of the grant of the patent: **29.01.2025**
(21) Application number: 22768375.2
(22) Date of filing: 19.08.2022
(51) Int. Cl.: B22F 10/28, B22F 3/10, B22F 10/16, B33Y 70/00, B33Y 10/00, B33Y 70/10

(54) **PARTICULATE FEEDSTOCK COMPOUND FOR USE IN A POWDER BED ADDITIVE MANUFACTURING PROCESS, AND SHAPING AND SINTERING PROCESS**
BINDEMITTELKOMPONENTE FÜR EINE ROHMATERIALVERBINDUNG ZUR VERWENDUNG IN EINEM FORMGEBUNGS- UND SINTERVERFAHREN, TEILCHENFÖRMIGE ROHMATERIALVERBINDUNG UND FORMGEBUNGS- UND SINTERVERFAHREN
COMPOSANT DE LIANT D'UN COMPOSÉ DE CHARGE DESTINÉ À ÊTRE UTILISÉ DANS UN PROCÉDÉ DE FAÇONNAGE ET DE FRITTAGE, COMPOSÉ DE CHARGE PARTICULAIRE ET PROCÉDÉ DE FAÇONNAGE ET DE FRITTAGE

(30) Priority: 19.08.2021 EP 21192103; 19.08.2021 EP 21192110; 19.08.2021 EP 21192113
(43) Date of publication of application: 26.06.2024
(73) Proprietor: Headmade Materials GmbH, 97294 Unterpleichfeld (DE)
(72) Inventor: STAUDIGEL, Christian, 97294 Unterpleichfeld (DE); FISCHER, Christian, 97294 Unterpleichfeld (DE)
(74) Representative: Meissner Bolte Partnerschaft mbB
(86) International application number: PCT/EP2022/073244
(87) International publication number: WO 2023/021203

(56) References cited:
- WO-A1-2016/004985
- WO-A1-2021/069843
- WO-A1-2022/073590
- JP-A- 2017 127 997

## Description

The present invention relates to a particulate feedstock compound comprising sinterable non-organic particles and a binder component, and a process comprising the steps of merging a plurality of particulate feedstock compounds, debinding and sintering. The particulate feedstock compound is specifically adapted for use in a powder bed additive manufacturing process.

Processes such as additive manufacturing, powder injection molding or pressing allow for the generation of customized parts in a quick and efficient way. Additive manufacturing involves material being added together such as powder grains being fused together, typically layer by layer. Generally, a typical additive manufacturing process comprises the steps of forming a first material-layer, and successively adding further material-layers thereafter, wherein each new material-layer is added on a pre-formed material-layer, until the entire three-dimensional structure (3D object) is materialized.

In Laser Beam Powder Bed Fusion (LB-PBF), powdered metal which is free of binder is sintered by the scanning of a high-power laser beam. To dispense with the necessity of high-power lasers, binder-coated metal powders were shaped by additive manufacturing. In a post-processing step, the binder is removed and the metal powder sintered.

WO 2018/197082 discloses a method for additively manufacturing a metal and/or glass-type and/or ceramic component. Feedstock compound particles are prepared from substrate particles and an at least two-phase binder. The feedstock compound particles are molten selectively in layers by means of electromagnetic radiation, such that a molded part is additively manufactured. The molded part is removed from the unmelted mixture, and the at least two-phase binder is then successively removed. Finally, the debound molded part is sintered. During a first step, one binder phase is extracted by a solvent. The residual binder, acting as a backbone to retain the shape, is removed simultaneously with and/or before the sintering process.

WO2016004985 relates to a filament suitable to be used in a 3D printing device, wherein the filament comprises a metal and/or ceramic powder, a thermoplastic binder and additives. The invention also relates to a process for producing a shaped body comprising the step of printing a shaped green body using the filament according to the invention. Also provided is the use of a filament according to the invention in a 3D printing device and a green body producible by mixing a metal and/or ceramic powder and a thermoplastic binder. The invention also relates to the use of a binder of the invention for the production of a filament for 3D printing devices.

However, different factors during the printing process may compromise the dimensional accuracy of the part relative to the object data that defines it. For example, it is often difficult to manufacture (green) parts having sharp and accurate edges and having a low porosity. Also, improvements in the shaping step should not result in disadvantages or deteriorations in the debinding step.

It is therefore an object of the present invention to provide a particulate feedstock compound which allows for high dimensional printing accuracy and a simple and economical way of debinding in a process employing the feedstock compound. The invention relates to a particulate feedstock compound for use in a powder bed additive manufacturing process, comprising, based on the total volume of the particulate feedstock compound,
a) sinterable non-organic particles having a maximum particle size of 200 µm dispersed throughout the compound particle, and
b) a binder component, the binder component comprising, relative to the volume of the binder component
   b-i) 3 to 70% by volume of a thermoplastic polyamide having a DSC melt peak temperature T_{P} below 140 °C, and
   b-ii)30 to 97% by volume of a wax or wax-type material, having a drop point in the range of 20 to 160 °C.

The invention also relates to a process comprising the steps of merging a plurality of the particulate feedstock compounds, debinding and sintering.

The following description of preferred embodiments refers to the particulate feedstock compound and the process, unless noted otherwise.

The particulate feedstock compound is useful in a powder bed additive manufacturing process, in particular a sinter-based powder bed additive manufacturing process, such as a selective laser additive manufacturing process or a multi-jet fusion process.

Generally, the shaping step of additive manufacturing processes involves providing a powder bed of a particulate feedstock compound in a construction space which is usually heated to an elevated temperature, e.g. to 50 to 60 °C. The particulate feedstock compound in the powder bed can absorb the energy from, e.g., an energy beam from a radiation source, such as a laser beam, and, and as a result, a localized region of the powder material increases in temperature. The local increase in temperature allows for selectively densifying or melting the particulate feedstock compound to bind the particulate feedstock compound to each other in a predefined manner.

It has been found that the melting behavior of the binder has a strong influence on the printing accuracy. While it is desirable that within the localized region a strong bond is formed between the particulate feedstock compound, formation of bonds to adjacent or neighboring particles should be avoided. Feedstock compounds with a non-optimized binder component may dissipate heat to adjacent particles which can soften and adhere to the outside surface of the part, resulting in poor surface definition.

For the binder components of the invention, the temperature transition from solid or semi-solid to fluid is very narrow, leading to less influence on adjacent feedstock compound particles in 3D printing. As a result, the feedstock compound particles irradiated with an energy beam can be converted from solid to fluid at comparably low temperature and form a dense green part without affecting adjacent feedstock compounds.

### Particulate Feedstock Compound

The particulate feedstock compound of the invention contains sinterable non-organic particles (a) and the binder component (b) as described above and is useful in a powder bed additive manufacturing process.

Herein, the term "particulate" denotes that the feedstock compound is composed of a collection (or plurality) of individual particles. The individual particles may have arbitrary shape such as irregular, cylindrical, rotational ellipsoid or essentially spherical.

Generally, the particulate feedstock compound has a particle size distribution such that at least 80% by volume, preferably at least 90% by volume, more preferably at least 95% by volume, most preferably at least 99% by volume, of the particulate feedstock compounds have a maximum particle size Bₘₐₓ in the range of 0.005 to 0.3 mm, preferably 0.008 to 0.2 mm, more preferably 0.01 to 0.2 mm, most preferably 0.015 to 0.15 mm.

Each particulate feedstock compound comprises a plurality of sinterable non-organic particles (a) dispersed throughout the particulate feedstock compound within a matrix of the binder component (b) and is held together by the binder component (b). A plurality of sinterable non-organic particles (a) per feedstock compound particle makes it possible for the shape of the particulate feedstock compound to be independent of the shape of the sinterable non-organic particles (a). Thus, for example, substantially spherical particulate feedstock compounds can be produced without the necessity of the sinterable non-organic particles (a) being spherical. This reduces the production costs since sinterable non-organic particles (a) with arbitrary or irregular particle geometry or broader particle size distribution are more readily available than powders having a particular, e.g., spherical, particle geometry.

The particulate feedstock compounds are, for example, produced by subjecting a suspension of sinterable non-organic particles (a) and a solvent, e.g. an alcoholic solvent, in which the binder component (b) was dissolved, to spray drying. Alternatively, a solidified melt of the binder component (b) having dispersed therein the sinterable non-organic particles (a) may be milled. Larger particulate feedstock compounds may also be compounded by an extruder with subsequent granulation.

In an embodiment, the particulate feedstock compound contains the sinterable non-organic particles (a) in an amount of about 0.70 to 0.99 · φᵣ by volume, preferably about 0.75 to 0.98 · φᵣ by volume, more preferably about 0.80 to 0.96 · φᵣ by volume, most preferably about 0.82 to 0.95 · φᵣ by volume, in particular about 0.84 to 0.94 · φᵣ by volume, in particular about 0.86 to 0.93 · φᵣ by volume, wherein φᵣ is the critical solids loading by volume. The remainder is comprised of binder component b).

Generally, the term "critical solids loading" is referred to as the amount of sinterable non-organic particles by volume in a feedstock compound at a critical limit. Said "critical limit" is reached when the feedstock compound becomes stiff and does not flow due to the relative viscosity becoming infinite upon addition of sinterable non-organic particles to the feedstock compound. Physically, "critical solids loading" defines the maximum packing arrangement of particles while still retaining a continuous material and it is the limit above which it is not possible to continue loading the binder matrix with solid powders. In this context, the term "relative viscosity" denotes the viscosity of the feedstock compound in relation to the viscosity of the neat binder in order to isolate the effect of the sinterable non-organic particles. The viscosity of the feedstock compound increases upon addition of sinterable non-organic particles.

There are several ways to determine the critical solids loading. For example, one can determine the peak in the torque of a kneader when more and more metal powder is added to the binder. After critical solids loading is reached, the torque usually decreases again as the feedstock compound becomes more friable. Alternatively, a pycnometer measurement may be used: up to the critical solids loading, the theoretical density is in agreement with the measured density at the pycnometer, above the critical solids loading, the measured density is below the theoretical density due to pores (see also: 1990, R. M. German, Powder Injection Molding, Metal Powder Industries Federation 1990, p.129-130). Rheological measurements may also be used to estimate the value of the critical solids loading by plotting φ · ηᵣ : (ηᵣ - 1) versus φ (J. S. Chong, E. B. Christiansen, A. D. Baer, J. Appl. Polym. Sci. 1971, 15, 2007-2021). In this context, φ denotes the loading, ηᵣ denotes the relative viscosity.

Alternatively, in an embodiment, the particulate feedstock compound contains the sinterable non-organic particles (a) in an amount of about 20 to 90% by volume, preferably 30 to 80% by volume, more preferably 40 to 75% by volume, most preferably 45 to 70% by volume, in particular 50 to 65% by volume, and
the binder component (b) in an amount of about 10 to 80% by volume, preferably 20 to 70% by volume, more preferably 25 to 60% by volume, most preferably 30 to 55% by volume, in particular 35 to 50% by volume.

### Sinterable Non-Organic Particles

The sinterable non-organic particles (a) include conventionally known sinterable materials. In general, the sinterable non-organic particles (a) are selected from metals, alloys, vitreous particles and ceramic particles.

In an embodiment, metals are selected from iron, stainless steel, steel, copper, bronze, aluminum, tungsten, molybdenum, silver, gold, platinum, titanium, nickel, cobalt, chromium, zinc, niobium, tantalum, yttrium, silicon, magnesium, calcium and combinations thereof. Suitably, the metal particles have a particle size distribution such that at least 85%, preferably at least 90%, more preferably at least 95%, most preferably at least 99% of the particles have a maximum particle size Aₘₐₓ in the range of 500 nm to 400 µm, preferably 1 µm to 150 µm, more preferably 3 µm to 50 µm, most preferably 5 µm to 25 µm.

Suitably, alloys are selected from steels such as stainless steels (316 L, 17-4 PH), chromium-nickel steels, bronzes, copper alloys such as Hovadur, nickel-base alloys such as Hastelloy or Inconel, cobalt and cobalt-chromium alloys such as stellite, aluminum alloys such as Aluminum 6061, tungsten heavy alloys, titanium alloys such as grade 1 via grade 5 (Ti-6AI-4V) to grade 38 according to ASTM.

In an embodiment, ceramic particles are selected from oxides such as aluminum oxides, silicon oxides, zirconium oxides, titanium oxides, magnesium oxides, yttrium oxides; carbides such as silicon carbides, tungsten carbides; nitrides such as boron nitrides, silicon nitrides, aluminum nitrides; silicates such as steatite, cordierite, mullite; and combinations thereof. Suitably, the ceramic particles have a particle size distribution such that at least 85%, preferably at least 90%, more preferably at least 95%, most preferably at least 99% of the particles have a maximum particle size Aₘₐₓ in the range of 200 nm to 25 µm, preferably 300 nm to 10 µm, more preferably 400 nm to 7 µm, most preferably 500 nm to 3 µm.

In an embodiment, vitreous particles are selected from non-oxide glasses such as halogenide glasses, chalcogenide glasses; oxide glasses such as phosphate glasses, borate glasses, silicate glasses such as aluminosilicate glasses, lead silicate glasses, boron silicate glasses, soda lime silicate glasses, quartz glasses, alkaline silicate glasses; and combinations thereof. Suitably, the vitreous particles have a particle size distribution such that at least 85%, preferably at least 90%, more preferably at least 95%, most preferably at least 99% of the particles have a maximum particle size Aₘₐₓ in the range of 200 nm to 25 µm, preferably 300 nm to 10 µm, more preferably 400 nm to 7 µm, most preferably 500 nm to 3 µm.

Suitably, the sinterable non-organic particles (a) may contain combinations of more than one of metals, alloys, vitreous particles and ceramic particles as described above, for example hard metals or metal matrix composites (also referred to as metal ceramic composites).

### Thermoplastic Polyamide

The binder component (b) comprises 3 to 70% by volume, preferably 5 to 60% by volume, more preferably 7 to 50% by volume, most preferably 10 to 40% by volume, in particular 12 to 35% by volume, in particular 15 to 30% by volume, of a thermoplastic polyamide (b-i), based on the total volume of the binder component (b).

The expression "polyamide" is intended to encompass polyamides and copolyamides. Copolyamides comprise at least two distinct types of repeating units. The comonomers are selected such that the copolyamide meets one or more certain melting criteria, including, e.g., DSC melt peak temperature T_{P}; melt viscosity and melt volume-flow rate.

The thermoplastic polyamide is characterized by having a DSC melt peak temperature T_{P} below 140 °C. Melt peak temperatures T_{P} within the identified range allow for selective densifying or melting with as little additional energy (e.g. laser energy) as possible, and low energy laser sources can conveniently be used. In an embodiment, the thermoplastic polyamide preferably has a DSC melt peak temperature T_{P} below 130 °C, in particular below 120 °C.

Differential scanning calorimetry (DSC) allows for the determination of physical properties of a material, e.g. glass transition temperature, melting temperature, melting enthalpy etc.

The melting process results in an endothermic peak in the DSC curve and the melting temperature refers to the melt peak temperature T_{P} in said DSC curve where the rate of change of endothermic heat flow is maximum.

The DSC curve may comprise a single melt peak. Alternatively, the DSC curve may comprise several melt peaks, i.e. several local maxima. For the purposes herein, the melt peak temperature T_{P} is defined as the temperature at the global maximum. The thermoplastic polyamide preferably exhibits a single melt peak. Herein, T_{P} is determined in accordance with DIN EN ISO 11357-3 in the second heating after a first heating/cooling cycle. For this purpose, a sample is heated in a first heat ramp from -20 °C to a temperature which is 20 K above completion of all thermal events, cooled to -20 °C afterwards and finally heated again in a second heat ramp from -20 °C to the temperature which is 20 K above completion of all thermal events, each with a heating and cooling rate of 10 K/min. "Thermal events" for the purpose herein means thermal events other than decomposition, or in other words, essentially reversible thermal events.

Preferably, the thermoplastic polyamide has a melt viscosity below 1500 Pa s, preferably below 1300 Pa s, more preferably below 1000 Pa s, most preferably below 800 Pa s, in particular below 600 Pa s, in particular below 500 Pa s, in particular below 400 Pa s, in particular below 300 Pa s, in particular below 200 Pa s, in particular below 100 Pa s, according to ISO 1133 with 2.16 kg at 160 °C.

Preferably, the thermoplastic polyamide has a melt viscosity below 1500 Pa s, preferably below 1300 Pa s, more preferably below 1000 Pa s, most preferably below 800 Pa s, in particular below 600 Pa s, in particular below 500 Pa s, in particular below 400 Pa s, in particular below 300 Pa s, in particular below 200 Pa s, in particular below 100 Pa s, according to ISO 1133 with 2.16 kg at 190 °C.

Preferably, the thermoplastic polyamide has a melt volume-flow rate of at least 1 cm³/10 min, preferably at least 2 cm³/10 min, more preferably at least 3 cm³/10 min, most preferably at least 4 cm³/10 min, in particular at least 5 cm³/10 min, in particular at least 6 cm³/10 min, in particular at least 7 cm³/10 min, in particular at least 8 cm³/10 min, in particular at least 9 cm³/10 min, in particular at least 10 cm³/10 min, in particular at least 20 cm³/10 min, in particular at least 30 cm³/10 min, in particular at least 40 cm³/10 min, in particular at least 50 cm³/10 min, in particular at least 60 cm³/10 min, in particular at least 70 cm³/10 min, in particular at least 80 cm³/10 min, in particular at least 90 cm³/10 min, in particular at least 100 cm³/10 min, in particular at least 110 cm³/10 min, in particular at least 120 cm³/10 min, in particular at least 130 cm³/10 min, in particular at least 140 cm³/10 min, in particular at least 150 cm³/10 min, in particular at least 160 cm³/10 min, in particular at least 170 cm³/10 min, in particular at least 180 cm³/10 min, in particular at least 190 cm³/10 min, in particular at least 200 cm³/10 min, according to ISO 1133 with 2.16 kg at 160 °C.

Preferably, the thermoplastic polyamide has a melt volume-flow rate of at least 1 cm³/10 min, preferably at least 2 cm³/10 min, more preferably at least 3 cm³/10 min, most preferably at least 4 cm³/10 min, in particular at least 5 cm³/10 min, in particular at least 6 cm³/10 min, in particular at least 7 cm³/10 min, in particular at least 8 cm³/10 min, in particular at least 9 cm³/10 min, in particular at least 10 cm³/10 min, in particular at least 20 cm³/10 min, in particular at least 30 cm³/10 min, in particular at least 40 cm³/10 min, in particular at least 50 cm³/10 min, in particular at least 60 cm³/10 min, in particular at least 70 cm³/10 min, in particular at least 80 cm³/10 min, in particular at least 90 cm³/10 min, in particular at least 100 cm³/10 min, in particular at least 110 cm³/10 min, in particular at least 120 cm³/10 min, in particular at least 130 cm³/10 min, in particular at least 140 cm³/10 min, in particular at least 150 cm³/10 min, in particular at least 160 cm³/10 min, in particular at least 170 cm³/10 min, in particular at least 180 cm³/10 min, in particular at least 190 cm³/10 min, in particular at least 200 cm³/10 min, according to ISO 1133 with 2.16 kg and 190 °C.

In an embodiment, the thermoplastic polyamide (b-i) is semi-crystalline. The term "semi-crystalline" characterizes those polymers which possess high degrees of inter- and intra-molecular order. The semi-crystalline nature of a polymer can be verified by a first order transition or crystalline melting point (Tₘ) as determined by differential scanning calorimetry (DSC). Preferably, the thermoplastic polyamide (b-i) is semi-crystalline because it exhibits a sharp transition separating the fluid and solidified states. Further, it is characterized by a strength increase by crystallization upon solidification.

Suitable polyamides include polyamides such as polyamide 12, copolyamides such as Griltex 2439 A, Griltex 1796 A, Griltex 1500 A, Griltex D 2638A (available from EMS-CHEMIE HOLDING AG); Orgasol 3502 D (available from Arkema), UNI-REZ 2620, UNI-REZ 2638, UNI-REZ 2656, UNI-REZ 2674, UNI-REZ 2720, UNI-REZ 2291 (available from Kraton Corporation);

Generally, polyamides can be produced by a reaction of carboxylic acids and amines to amides or by reaction of moieties/derivatives of carboxylic acids and amines. Polyamide homopolymers can be produced by reaction of one monomer, i.e. amino acids or lactames having 4 to 25 carbon atoms, such as Polyamide 6 by ring opening polymerization of ε-caprolactam. Polyamides can be produced by polycondensation reaction of diamines having 4 to 25 carbon atoms and dicarboxylic acids having 4 to 25 carbon atoms or their salts, such as Polyamide 6.6 by polycondensation reaction of hexamethylenediamine and adipic acid or by reaction of hexamethylenediamine adipate. Copolyamides can be produced by polycondensation reaction of different amines with different carboxylic acids, preferably diamines having 4 to 25 carbon atoms such as hexamethylenediamine, preferably dicarboxylic acids having 4 to 25 carbon atoms such as adipic acid, azelaic acid, dodecandioic acid, preferably amino-carboxylic acids having 4 to 25 carbon atoms such as aminoundecanoic acid, or their salts. By mixing different monomers and reaction to copolyamide ternary, quaternary and multinary system, the properties, e.g. melting point and/or viscosity and/or adhesion, of the copolyamide can be tailored. For example, by mixing the monomers of PA6 (ε-caprolactam), PA6.6 (hexamethylenediamine and adipic acid or hexamethylenediamine adipate) and PA12 (amino-laurylic acid) in a ternary system, a melting point of 110 to 120 °C can be reached in mixtures with 20 to 40% PA6.6, 20 to 40% PA6 and 30 to 50% PA12, while the melting points of pure PA6.6, PA6 and PA12 are 250 °C, 215 °C and 176 °C, respectively. Reaction with branched and/or aromatic carboxylic acids and/or branched and/or aromatic amines as well as with further reaction partners such as ether, esters, elastomers and many more are known per se.

Griltex 2439 A (available from EMS-CHEMIE HOLDING AG) is a particularly preferred thermoplastic polyamide.

### Wax or Wax-type Material

The binder component (b) further comprises 30 to 97% by volume, preferably 40 to 95% by volume, more preferably 50 to 93% by volume, most preferably 60 to 90% by volume, in particular 65 to 88% by volume, in particular 70 to 85% by volume, of the wax or wax-type material (b-ii), based on the total volume of the binder component (b).

The wax or wax-type material is characterized by having a drop point in the range of from 20 to 160 °C according to DIN ISO 2176. More preferably, the polar wax has a drop point in the range of from 30 to 150 °C, still more preferred in the range of from 35 to 140 °C, in particular in the range of from 40 to 130 °C, in particular in the range of from 40 to 120 °C, in particular in the range of from 40 to 110 °C, in particular in the range of from 40 to 100 °C, and most preferred in the range of from 40 to 90 °C.

The drop point within the identified range, together with the DSC melt peak temperature T_{P} of the thermoplastic polyamide ensures a favorable overall melting behavior of the binder.

More preferably, the wax has a melt viscosity below 30 Pa s, preferably below 20 Pa.s, more preferably below 10 Pa.s, most preferably below 5 Pa.s, in particular below 3 Pa s, in particular below 1 Pa s, in particular below 700 mPa s, in particular below 300 Pa s, in particular below 100 mPa s, in particular below 50 mPa s, according to DIN EN ISO 3104 at 160 °C.

More preferably, the polar wax has a melt viscosity below 40 Pa s, preferably below 30 Pa s, more preferably below 20 Pa s, most preferably below 10 Pa s, in particular below 5 Pa s, in particular below 3 Pa s, in particular below 1 Pa s, in particular below 700 mPa·s, in particular below 300 Pa·s, in particular below 100 mPa s, according to DIN EN ISO 3104 at 120 °C.

The term "wax" is a collective technological term for a group of organic substances that can generally be described in terms of their physical and technical properties. In particular, waxes are characterized by the fact that they are solids with a melting point above ambient temperature (usually between 50 °C and 160 °C), a low melt viscosity (below 10 Pa s at 10 °C above the melting point). Waxes melt without decomposing. Waxes can be also divided in natural waxes of fossil origin such as paraffin, montan wax; natural waxes of natural origin such as beeswax, carnauba wax; semi-synthetic waxes (also referred to as chemically modified natural waxes) such as ethylene-bis-stearamide; synthetic waxes such as polyolefin waxes. In the context of this patent application, the expression "wax-type materials" is intended to include waxes as well as wax-type substances such as ester-type waxes, higher or polyhydric alcohols, higher fatty acids showing wax-like properties, and mixtures thereof.

Suitable wax-type materials include:
**paraffin waxes** such as microcrystalline wax;
**ester-type waxes** such as beeswax, candelilla wax, carnauba wax,
**esters of organic acids** such as sulfonic acids or carboxylic acids, preferably of fatty acids having 6 to 40 carbon atoms or esters of aromatic carboxylic acids such as benzoic acid, phthalic acid or hydroxybenzoic acid;
**amide waxes** such as amides of organic acids such as sulfonic acids or carboxylic acids, preferably of fatty acids having 6 to 40 carbon atoms such as oleamide such as Deurex A 27 P (available from Deurex AG), erucamide such as Deurex A 26 P (available from Deurex AG), ethylene-bis-stearamide such as Deurex A 20 K (available from Deurex AG); sulfonamide such as N-ethyltoluene-4-sulfonamide;
**polyolefinic waxes** such as
   polyethylene-wax such as Deurex E 06 K, Deurex E 08, Deurex E 09 K, Deurex E 10 K (available from Deurex AG), VISCOWAX^{®} 111, VISCOWAX^{®} 116, VISCOWAX^{®} 123, VISCOWAX^{®} 135 (available from Innospec Leuna);
   oxidized polyethylene wax such as Deurex EO 40 K, Deurex EO 42, Deurex EO 44 P, Deurex E 76 K (available from Deurex AG), VISCOWAX^{®} 252, VISCOWAX^{®} 262, VISCOWAX^{®} 271, VISCOWAX^{®} 2628 (available from Innospec Leuna),
   copolymeric waxes of polyolefins, preferably ethylene vinyl acetate such as VISCOWAX^{®} 334, VISCOWAX^{®} 453 (available from Innospec Leuna),
   polypropylene-wax such as Deurex P 36 K, Deurex P 37 K (available from Deurex AG),
   oxidized polypropylene wax;
**Fischer-Tropsch wax** such as VESTOWAX EH 100, VESTOWAX H 2050 MG, VESTOWAX SH 105, Shell GTL Sarawax SX 105, Shell GTL Sarawax SX 80 (available from Evonik Industries AG);
**higher organic acids** such as fatty acids having 10 to 40 carbon atoms;
**higher or polyhydric alcohols** such alcohols having 10 to 40 carbon atoms;
**polyethylene glycol**;
and mixtures thereof.

In order to accommodate different purposes, the wax or wax-type material may be a mixture of different waxes or wax-type materials.

Generally, paraffin waxes such as microcrystalline wax are derived from petroleum. For example, microcrystalline wax is obtained as a refined mixture of solids mainly containing saturated aliphatic hydrocarbons produced by de-oiling of certain fractions from the petroleum refining process.

Generally, the ester-type waxes may be waxes occurring naturally or produced synthetically. Suitably, naturally occurring ester-type waxes are selected from beeswax, candelilla wax, and carnauba wax; and synthetically produced ester-type waxes are suitably selected from esters of carboxylic acids, preferably of fatty acids having 5 to 34 carbon atoms, more preferably of fatty acids having 10 to 28 carbon atoms, or esters of a hydroxybenzoic acid. Preferably, the ester-type waxes comprise the esters of a hydroxybenzoic acid such as esters of 4-hydroxybenzoic acid. Loxiol 2472 (4-hydroxybenzoic behenylester, available from Emery Oleochemicals GmbH) is particularly preferred.

Generally, polyolefin waxes can be produced by thermally decomposing branched high molecular weight polyolefins or directly polymerizing olefins. Suitable polyolefin waxes include, for example, homopolymers of propylene or higher 1-olefins, copolymers of propylene with ethylene or with higher 1-olefins or their copolymers with one another. The higher 1-olefins are preferably linear or branched olefins having 4 to 20, preferably 4 to 6 carbon atoms. These olefins may have an aromatic substitution conjugated to the olefinic double bond. Examples of these are 1-butene, 1-hexene, 1-octene or 1-octadecene, and styrene. The polyolefin waxes may be oxidized. Polyethylene waxes such as Deurex E 06 K (available from Deurex AG) are particularly preferred.

Generally, amide waxes such as amides of sulfonic acids or carboxylic acids, preferably fatty acids can be produced by condensation reactions of amides such as ethylenediamine and sulfonic acids or carboxylic acids , preferably fatty acids having 5 to 34 carbon atoms, preferably 10 to 28 carbon atoms. Oleamide such as Deurex A 27 P (available from Deurex AG), erucamide such as Deurex A 26 P (available from Deurex AG), ethylene-bis-stearamide such as Deurex A 20 K (available from Deurex AG) are particularly preferred.

In view of a compromise between compatibility with the thermoplastic polyamide and solvent solubility, the wax or wax-type material is preferably selected from polar waxes and polar wax-type materials.

Herein, the term "polar wax" or "polar wax-type material" means a wax or wax-type material whose chemical structure is formed essentially from, or even constituted by, carbon and hydrogen atoms, and comprising at least one highly electronegative heteroatom such as an oxygen, nitrogen or sulfur atom.

Preferably, the polar wax is selected from oxidized polyolefinic waxes, ester-type waxes, amide waxes, higher organic acids, higher or polyhydric alcohols, polyethylene glycol, and mixtures thereof.

Preferably, the ester-type waxes include esters of organic acids. Preferably, the amide waxes include amides of organic acids such as sulfonic acids or carboxylic acids. Representatives of suitable waxes that are commercially available are those mentioned above.

In a still more preferred embodiment, b-ii) is a wax-type material selected from aromatic esters and aromatic sulfonamides. The alcohol of the aromatic ester may be an alcohol having 1 to 40 carbon atoms. The aromatic sulfonamides may carry at least one organic moiety having 1 to 40 carbon atoms at the amide nitrogen atom.

### Plasticizer

In an embodiment, the binder component b-ii) is a plasticized wax or wax-type material. "Plasticized wax or wax-type material" means the combination of a wax or wax-type material with a plasticizer. Generally, a plasticizer is a high-boiling liquid with a boiling point generally above 180 °C which is compatible with the wax or wax-type material to decrease its melt viscosity. The skilled person will appreciate that the ternary combination of the thermoplastic polyamide, the wax or wax-type material, and the plasticizer forms a homogeneous phase. Generally, plasticizers are polar compounds which means that their chemical structure comprises at least one highly electronegative heteroatom such as an oxygen atom or a nitrogen atom.

Suitably, the plasticized wax or wax-type material b-ii) comprises the plasticizer in an amount of up to 50 vol.-%, preferably up to 40 vol.-%, more preferably up to 30 vol.-%, most preferably up to 20 vol.-%, in particular up to 15 vol.-%, in particular up to 10 vol.-%, relative to the total volume of b-ii).

Suitable plasticizers include
liquid esters of aliphatic carboxylic acids such as dimethyl sebacate, di-n-octyl sebacate, dimethyl succinate, dimethyl adipate, dibutyl adipate, dioctyl adipate, dimethyl azelate, dioctyl azelate, di-n-butyl maleic ester, dioctyl maleate, butyl oleate, dimethyl hexanedioate, benzyl laurate, methyl laurate, ethyl myristate, diacetyl triethyl citrate, acetyl tributyl citrate;
liquid esters of aromatic carboxylic acids such as dimethyl phthalate, methyl 2-hydroxybenzoate, butyl 4-hydroxybenzoate, butyl benzoate, 2-ethylhexyl benzoate, bis(2-ethylhexyl) terephthalate;
alkylsulfonic phenyl ester;
liquid amides such as n-butylbenzenesulfonamide, N-ethyltoluene-2-sulfonamide, N-ethyl-4-toluenesulfonamide;
liquid organic acids such as carboxylic acids such as fatty acids such as caprylic acid, myristoleic acid;
higher alcohols such as 1-decanol, 2-decanol, 1-octadecanol;
polyhydric alcohols such as butanediol, ethylene glycol, propylene glycol;
and mixtures thereof.

Plasticizers selected from aromatic esters and aromatic sulfonamides are generally preferred.

### Optional Binder Components

The binder component (b) comprises at least two binder component ingredients: the thermoplastic polyamide (b-i) and the wax or wax-type material (b-ii). Optionally, the binder component (b) may comprise further functional additives in view of good processability.

The binder component (b) may comprise a dispersant. One material constituting, for example, the wax or wax-type material (b-ii) may act as a dispersant. Otherwise, an extraneous dispersant may additionally be incorporated.

Generally, the dispersant acts as an adhesion promotor and/or compatibilizer between the binder components (b-i) and/or (b-ii); and/or between the non-organic particles (a) and the binder component (b).

Suitably, the dispersant is selected from fatty acids having 10 to 24 carbon atoms such as capric acid, lauric acid, myristic acid, palmitic acid, stearic acid, arachidic acid, behenic acid, lignoceric acid, or oleic acid, preferably stearic acid.

Suitably, the extraneous dispersant is selected from metal salts of fatty acids. Generally, the metal may be selected from alkali metals, alkaline earth metals or transition metals such as lithium, sodium, potassium, magnesium, calcium, strontium, barium, and zinc. Suitably, the fatty acid may be selected from the fatty acids having 5 to 34 carbon atoms, preferably 10 to 28 carbon atoms as described above. Preferred metal salts of fatty acids are selected from sodium stearate, magnesium stearate, zinc stearate or magnesium oleate.

Due to the viscosity of the binder component (b) in the abovementioned ranges, the latter becomes, in the molten state, uniformly and homogeneously distributed between the sinterable non-organic particles (a) and joins the individual sinterable non-organic particles (a) or the individual particulate feedstock compounds.

In order to adjust the viscosity of the binder component (b), it may be desirable to incorporate a thinning agent or thickening agent. Thickening agents serve to increase the viscosity of the binder component when molten. This enhanced viscosity prevents the sag of the sinterable non-organic particles and facilitates uniform flow of the particles and imparts resistance to segregation and sedimentation. Thinning agents are employed to lower the viscosity of the overall binder component. The thinning agent can act as a plasticizer to allow control of the rheological properties and the fluidity of the thermoplastic polyamide (b-i) or the wax or wax-type material (b-ii).

Suitably, the thickening or thinning agent is selected from waxes and/or thermoplastic polymers such as polyolefins and polyolefin waxes, polyamides and amide waxes, paraffin waxes, ester-type waxes; vinyl esters such as ethylene vinyl acetate; abietates; adipates; alkyl sulfonates; amines and amides such as formamide, hydroxylalkylformamide, amine, diamine; azelates; benzoates; citrates; chlorinated paraffins; ether-ester plasticizers; glutarates; hydrocarbon oils; isobutyrates; maleates; oleates; phosphates; phthalates; sulfonamides; oily liquids such as peanut oil, fish oil, castor oil; and mixtures thereof. Suitably, polyethylene wax Deurex E 09 K having a viscosity of < 40 mPa·s at 140 °C can be used as a thinning agent, while Deurex E 25 having a viscosity of 4000 mPa·s at 140 °C or even higher molecular weight polyolefinic compounds can be used as thickening agent.

In an embodiment, the thickening or thinning agent and/or dispersant may be present in an amount of 0 to 15% by volume, preferably 0.01 to 10% by volume, more preferably 0.02 to 8% by volume, most preferably 0.5 to 6% by volume, based on the total volume of the binder component (b).

### Solvent Debinding

The thermoplastic polyamide (b-i) and the wax or wax-type material (b-ii) differ in their solubility in a solvent. The solvent is preferably selected from alcohols such as ethanol, or propanol; aromatic compounds such as benzene, toluene, or xylene; esters such as ethyl acetate; ethers such as diethylether, or tetrahydrofuran; ketones such as acetone; alkanes such as hexane, or heptane; halogenated hydrocarbons such as n-propyl bromide, trichloroethylene, perchloroethylene, n-methyl pyrrolidine; and mixtures thereof; water; and gases in supercritical state.

Different solubility allows for selective debinding. In the selective debinding step, one binder component is removed wherein at the same time another binder component remains within the part to be manufactured, holding together the sinterable non-organic particles. Such debinding processes, e.g. solvent debinding, are known per se.

Suitably, in the solvent debinding process, one binder component may be selectively removed from a green part by means of dissolving said binder component in a solvent, wherein a second binder component remains within the green part. Therefore, the binder components need to differ in e.g. molecular weight or polarity in order to exhibit different solubilities in the solvent.

### Process

The invention further relates to a process comprising the steps of:
- merging a plurality of the particulate feedstock compounds to obtain a green part, and
- partially debinding the green part by selectively removing the wax or wax-type material (b-ii) to obtain a brown part comprising the sinterable non-organic particles (a) bound to each other by the thermoplastic polyamide (b-i), and
- sintering the brown part to obtain a sintered part.

In an embodiment, the process is selected from a powder bed additive manufacturing process, in particular a sinter-based powder bed additive manufacturing process, such as a selective laser additive manufacturing process or a multi-jet fusion process.

In the context of the present patent application, the term "merging" refers to "selectively melting and solidifying" in the event that the process is selected from an additive manufacturing process.

By carefully selecting the components and process parameters, components may be obtained which preferably do not have any cracking. Such cracking occurs, e.g., when debinding is carried out too fast or at harsh conditions. Thus, the components and process parameters are preferably selected such that harmful conditions are avoided.

Generally, in an additive manufacturing process using radiation from a laser-array, radiation heating element etc., e.g. a laser additive manufacturing process or a multi jet fusion process from HP Inc., the particulate feedstock compounds are applied layer-wise followed by densification and solidifying, e.g. by cooling. During the densification, the binder component (b) which is comprised in the particulate feedstock compounds is selectively and layer-wise molten by means of electromagnetic radiation, e.g. of a laser.

In a preferred embodiment, the step of merging a plurality of the particulate feedstock compounds comprises the steps of:
- providing a first layer of feedstock compound particles;
- selectively densifying the first layer of feedstock compound particles to bind the compound particles to each other in a predefined manner so to produce a first shaped part layer;
- providing at least one further layer of feedstock compound particles on the first shaped part layer; and
- selectively densifying the further layer feedstock compound particles to bind the feedstock compound particles to each other in a predefined manner so to produce at least one further shaped part layer, the first shaped part layer and the further shaped part layers forming a green part.

Preferably, selectively densifying the first and further layer of compound particles involves selectively irradiating at least one of the first or the at least one further layer with electromagnetic radiation, preferably a laser beam.

A building chamber is configured to receive the particulate feedstock compound. Upon selectively densifying, for example by a laser additive manufacturing process, the feedstock compound particles are bound to each other in a predefined manner so to produce a first shaped part layer. Then, at least one further layer of feedstock compound particles is selectively densified on the first shaped part layer to bind the feedstock compound particles to each other in a predefined manner so to produce at least one further shaped part layer joined to the first shaped part layer. The first shaped part layer and the further shaped part layers jointly form an integral part. The integral part may then be removed from the building chamber and freed from unbound particulate feedstock compound.

In the process, the binder component (b) becomes distributed between the sinterable non-organic particles (a) and holds them together after solidification. After the green part was made, it is taken out from the unmelted layers or the mold.

The partial removal of the temporary organic binder is carried out by solvent treatment.

Suitably, the wax or wax-type material (b-ii) is selectively removed, whereas the thermoplastic polyamide (b-i) is not removed. The resulting part after the debinding step is referred to as a brown part. The brown part comprises sinterable non-organic particles (a) bound to each other by the thermoplastic polyamide (bi) and, optionally, remaining wax or wax-type material (b-ii).

The remaining binder components retained in the brown part provide a brown part that is stable and sufficiently strong to be handled and transported between the debinding and sintering steps.

In the solvent treatment process, the green part is dipped into a suitable solvent. Suitably, the solvent is selected such that the thermoplastic polyamide (b-i) has a lower solubility than the wax or wax-type material (b-ii) in the solvent or, preferably, the thermoplastic polyamide (b-i) is essentially insoluble in the solvent and the wax or wax-type material (b-ii) is soluble in the solvent. Suitable solvents are selected from alcohols such as ethanol or propanol; aromatic compounds such as benzene, toluene or xylenes; esters such as ethyl acetate; ethers such as diethylether or tetrahydrofuran; ketones such as acetone; alkanes such as hexane or heptane; halogenated hydrocarbons such as n-propyl bromide, trichloroethylene, perchloroethylene, n-methyl pyrrolidine; water; gases in supercritical state; and mixtures thereof. During the solvent treatment process, the solvent is preferably kept at a temperature T_{L} in the range of 20 to 100 °C, preferably 25 to 80 °C, more preferably 30 to 60 °C.

The partial removal of the binder component (b-ii) results in a porous structure of the brown part. The sinterable non-organic particles (a) are held together by the thermoplastic polyamide (b-i).

### Sintering step

In an embodiment, the process further comprises the step of sintering the brown part to obtain a sintered part.

For this purpose, the brown part is suitably subjected to a sintering step after the debinding step. During the sintering step, the thermoplastic polyamide (b-i) is removed and the debound part (brown part) is sintered to obtain the sintered part. Generally, on further removal of the binder and the subsequent sintering of the brown part, shrinkage occurs.

Suitably, the residual binder is driven out at a first temperature T₁ which is in the range of 100 to 750 °C, preferably 150 to 700 °C, more preferably 200 to 650 °C, most preferably 300 to 600 °C. A suitable temperature T₁ may also be dependent on the atmosphere. Preferably, the first temperature T₁ is selected as a function of the residual binder components. The removal of the thermoplastic polyamide (b-i) at the temperature T₁ is carried out for a period of time Δt₁ which is dependent on the part geometry and in particular is proportional to the square of the wall thickness of the part to be produced. Preferably, the period of time Δt₁ is selected such that at least 95%, preferably at least 99%, more preferably at least 99.9%, most preferably 100% of the binder components (b-i) and (b-ii) are removed. Binder which is not removed is not available as polymeric binder in the part but is diffused, e.g. as carbon, into the metal part and increases the carbon content in the metal part. Thermal debinding may be carried out at more than one temperature T₁, e.g. the removal of a part of the thermoplastic polyamide (b-i) at the temperature T₁ₐ is carried out for a period of time Δt₁ₐ and the removal of the rest of the thermoplastic polyamide (b-i) at the temperature T_{1b} is carried out for a period of time Δt_{1b}.

The sinterable non-organic particles (a) partly form sintering necks, so that the part is held together despite removal of the remaining binder components. Owing to the microporous structure of the part, thermal binder removal occurs quickly and uniformly.

Undesirable chemical reactions during the thermal binder removal may be avoided by means of an inert gas atmosphere or a reducing atmosphere or high vacuum. The inert gas atmosphere comprises, in particular, at least one noble gas which noble gas may suitably be selected from, e.g., nitrogen, helium and argon. The reducing atmosphere may include gases such as hydrogen, carbon dioxide, and/or carbon monoxide.

Suitably, sintering is carried out at a second temperature T₂ which is in the range of 600 to 2000 °C, preferably 800 to 1800 °C, more preferably 900 to 1500 °C. In the production of a ceramic and/or vitreous part, the second temperature T₂ is preferably in the range of 600 to 2400 °C, more preferably 800 to 2200 °C, most preferably 1100 to 2000 °C. In any case, the sintering temperature T₂ is below the melting temperature of the sinterable non-organic particles. The sintering at the second temperature T₂ is carried out for a period of time Δt₂ which is dependent on the geometry of the part and the material to be sintered. Preferably, the period of time Δt₂ is so long that no significant change in the porosity of the part can be achieved by subsequent further sintering. Sintering may be carried out at more than one temperature T₂, e.g. a sintering step at the temperature T₂ₐ is carried out for a period of time Δt₂ₐ and another sintering step at the temperature T_{2b} is carried out for a period of time Δt_{2b}.

During this sintering step, the molded part will shrink essentially without affecting the shape of the molded part. The powder particles will fuse together and the open space between the powder particles disappears. Hence, during sintering, the density of the product increases and the product shrinks. The sintering step is commonly completed when the product has reached a density of about 90 to 100% by volume of the solid of which the powder is made, depending on the material and later use of the product.

Preferably, after the sintering step, the part is completely free of binder. As a result, the part forms an integral structure of high density.

The present invention is described in detail below with reference to the attached figures and examples.
Figure 1 depicts the cylindrical testing specimen (green parts) obtained from feedstock compounds according to table 3, 1-F (figure 1 A), 2-F (figure 1 B) and 3-F (figure 1 C).
Figure 2 depicts the notched specimen in side view and top view obtained from the feedstock compound according to table 3, 1-F.
Figure 3 depicts the notched specimen in side view and top view obtained from the feedstock compound according to table 3, 2-F.
Figure 4 depicts the notched specimen in side view and top view obtained from the feedstock compound according to table 3, 3-F.

### Examples

### Methods

### DSC measurements

The DSC measurements were performed using a NETZSCH DSC 214 Polyma device. The sample was prepared in an aluminum Concavus pan (crucible) from NETZSCH with perforated lid. For this purpose, a sample is heated in a first heat ramp from -20 °C to 160 °C (in examples 2-B and 3-B: 180 °C), cooled to -20 °C afterwards and finally heated again in a second heat ramp from -20 °C to 160 °C (in examples 2-B and 3-B: 180 °C), each with a heating and cooling rate of 10 K/min. Measurement were performed with nitrogen in quality 5.0 as purging gas with a gas flow of 40 mL/min.

### Melt index flow rate

The melt mass-flow rate, MFR, often also designated as melt index, describes the flow properties of plastics at a defined temperature. This property is measured by extruding a thermoplastic polymer melt through a capillary of known dimensions at a defined temperature and under a pressure determined by a weight. The result is the mass extruded per time unit, expressed in g/10 min. If the melt density is known, it is possible to determine the MFR from the melt volume flow rate, MVR. In this measurement procedure, the weighing of polymer sections is replaced by a continuous measurement of the extrusion volume. The result of the MVR value is expressed in cm³/10 min.

The experiments were performed on a Goettfert Melt Flow Index Tester according to DIN ISO 1133-1 with 2.16 kg at 190 °C. Samples were dried for 6 hours at 80 °C before testing.

### Materials

The following table shows the properties of thermoplastic polyamides used in the examples that follow.

**Table 1: DSC melt peak temperature T_{P}, melt volume flow rate MVR, and melt viscosity values of components used as material (b i).**

| # | material (b-i) | T_{P} of (b-i) [°C] | MVR of (b-i) [cm³/10 min] | melt viscosity of (b-i) [Pa·s] | conditions |
|---|---|---|---|---|---|
| 1 | Griltex 2439 A | 117.6 | 58^{[1]} | 180^{[1]} | 160 °C / 2.16 kg |
| 2 | Griltex 1796A | 157.6 | 20 ^{[1]} | 500^{[1]} | 190 °C / 2.16 kg |
| 3 | Orgasol 3502 D | 142.1 | 2.75 | 3905 | 190 °C / 2.16 kg |
| 4 | Sinterline 3400 HT110 Natural | 206.9 | 23 ^{[2]} | 450 ^{[2]} | 235 °C / 2.16 kg |

| | | | | | |
|---|---|---|---|---|---|
| [1] data from product data sheet available from EMS-CHEMIE [2] data from A.D.K. Katta, Analysis of PA6 Powder Ageing During the Selective Laser Sintering process (Master thesis), Aalen, 2019. * comparative example | | | | | |

### Production Examples

Binder components 1-B to 6-B were produced according to table 2. Feedstock compounds 1-F to 6-F of binder components 1-B to 6-B were produced according to table 3.

**Table 2: Binder components 1-B to 6-B; vol.-% relative the total volume of the binder component (b).**

| # | material (b-i) | (b-i) [vol.-%] | material (b-ii) | (b-ii) [vol.-%] |
|---|---|---|---|---|
| 1-B | Griltex 2439 A ^{[1]} | 27 | Loxiol 2472 ^{[2]} | 69 |
| | | | Loxiol G20 ^{[3]} | 4 |
| 2-B | Griltex 1796A ^{[4]} | 27 | Loxiol 2472 ^{[2]} | 69 |
| | | | Loxiol G20 ^{[3]} | 4 |
| 3-B | Orgasol 3502 D ^{[5]} | 27 | Loxiol 2472 ^{[2]} | 69 |
| | | | Loxiol G20 ^{[3]} | 4 |
| 4-B | Griltex 2439 A ^{[1]} | 27 | Loxiol 2472 ^{[2]} | 73 |
| 5-B | Griltex 2439 A ^{[1]} | 30 | N-ethyltoluene-4-sulfonamide ^{[6]} | 55 |
| | | | Deurex A 27 P ^{[7]} | 10 |
| | | | Loxiol G20 ^{[3]} | 5 |
| 6-B* | Sinterline 3400 HT110 Natural ^{[8]} | 20 | Loxiol 2472 ^{[2]} | 65 |
| | | | Loxiol G20 ^{[3]} | 15 |

| | | | | |
|---|---|---|---|---|
| [1] copolyamide having a DSC melting range of 115 to 125 °C, available from EMS-CHEMIE HOLDING AG [2] 4-hydroxybenzoic behenylester available from Emery Oleochemicals GmbH [3] stearic acid available from Emery Oleochemicals GmbH [4] copolyamide having a DSC melting range of 150 to 160 °C, available from EMS-CHEMIE HOLDING AG [5] copolyamide available from Arkema [6] N-ethyltoluene-4-sulfonamide available from Sigma-Aldrich [7] oleamide available from Deurex AG [8] polyamide 6 available from Solvay Engineering Plastics | | | | |

Binder components 2-B, 3-B, and 6-B are comparative.

**Table 3: Feedstock compounds 1-F to 6-F (vol.-% relative the total volume of the particulate feedstock compound).**

| # | metal (a) | amount (a) [vol.-%] | binder comp. (b) (# in table 2) | amount (b) [vol.-%] |
|---|---|---|---|---|
| 1-F | stainless steel 316 L ^{[1]} | 62 | 1-B | 38 |
| 2-F | stainless steel 316 L ^{[1]} | 62 | 2-B | 38 |
| 3-F | stainless steel 316 L ^{[1]} | 62 | 3-B | 38 |
| 4-F | stainless steel 316 L ^{[1]} | 62 | 4-B | 38 |
| 5-F | stainless steel 316 L ^{[1]} | 62 | 5-B | 38 |
| 6-F* | stainless steel 316 L ^{[1]} | 62 | 6-B* | 38 |

| | | | | |
|---|---|---|---|---|
| [1] gas atomized, particle size 90%: 22 µm. available from Sandvik Osprey Ltd. * comparative example. | | | | |

### Manufacture of green parts

### Laser additive manufacturing

Cylindrical testing specimen were produced by a laser additive manufacturing process using a Formiga P110 (available from EOS GmbH). The feedstock compounds 1-F to 3-F of table 3 were used as starting materials.

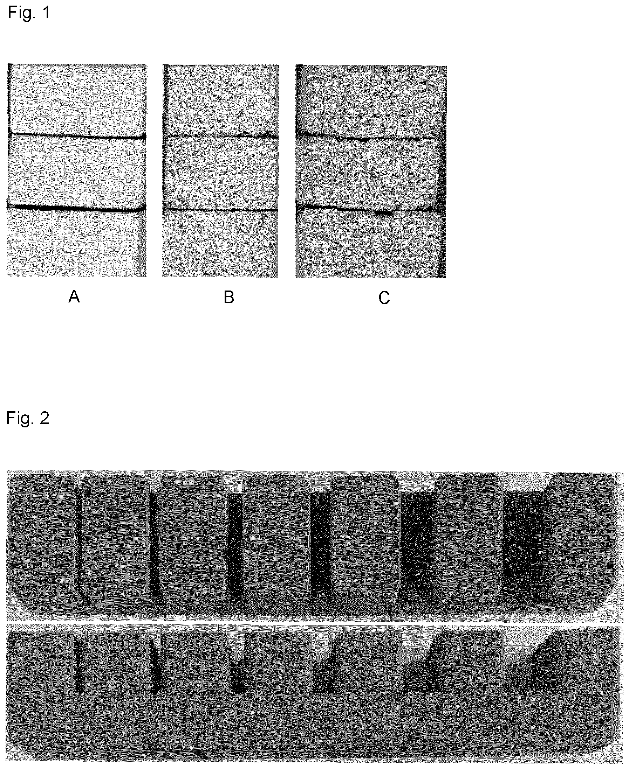

Figure 1 depicts the cylindrical testing specimen (green parts) obtained from feedstock compounds according to table 3, 1-F (figure 1 A), 2-F (figure 1 B) and 3-F (figure 1 C).

For the feedstock compounds 1-F to 3-F, the laser output was 25 W at a laser speed of 4450 mm/s and the powder bed surface temperature was 60 °C. The hatch spacing was varied (0.13 mm vs. 0.07 mm) resulting in a different energy input: A hatch spacing of 0.13 mm resulted in an energy input of 42.3 mJ/mm²; a hatch spacing of 0.07 mm resulted in an energy input of 78.5 mJ/mm².

Processing the comparative feedstock compound 6-F higher requires more energy input than available by the Formiga P110. But even with this, the edges and faces are blurred and the green part density is insufficient.

The feedstock compounds 1-F to 3-F of table 3 were used as starting materials for producing notched specimen by a laser additive manufacturing process using a Formiga P110 as described above (see "cylindrical testing specimen"). Herein, the term "notched specimen" denotes a rectangular solid which comprises one or more notches, wherein the notches may have different widths. Such notched specimen are depicted in side view and top view in figures 2 to 4.

In figure 2, feedstock compound 1-F was used as starting material at a laser output of 25 W, a laser speed of 4450 mm/s and a hatch spacing of 0.13 mm resulting in an energy input of 42.3 mJ/mm².

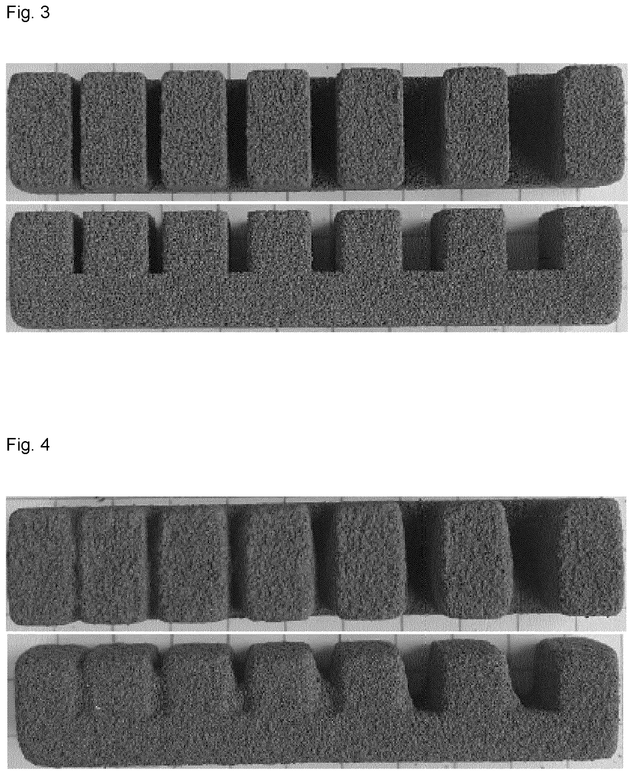

In figure 3, feedstock compound 2-F was used as starting material at a laser output of 25 W, a laser speed of 4450 mm/s and a hatch spacing of 0.07 mm resulting in an energy input of 78.5 mJ/mm².

In figure 4, feedstock compound 3-F was used as starting material at a laser output of 25 W, a laser speed of 4450 mm/s and a hatch spacing of 0.07 mm resulting in an energy input of 78.5 mJ/mm².

The production of such notched specimen aimed at obtaining specimen, i.e. parts, of high density with, at the same time, high representation of the geometry of the aimed part and little caking of the particulate feedstock compound, preferably at low laser energy input. The results are depicted in figures 2 to 4: The notched specimen depicted in figure 2 provides high density, high representation of the geometry and little caking at low laser energy input of 42.3 mJ/mm². Contrarily, the notched specimens in figures 3 and 4 are less dense and/or the notches are less properly shaped due to caking at an energy input of 78.5 mJ/mm². Nevertheless, the notched specimens in figures 3 and 4 may still be found useful in applications having less stringent requirements.

### Manufacture of sintered parts

Tensile tests according to DIN EN ISO 22068 were performed with tensile test pieces. Said tensile test pieces were additively manufactured using feedstock compound 1-F according to table 3 with a Formiga P110 as described above obtaining a green part. Said green part was then subjected to a solvent debinding step and a sintering step. For solvent debinding, the green part of feedstock compound 1-F was dipped into acetone at a temperature of 40 °C for 16 h. Sintering was carried out in a cycle with a heating and cooling rate of 5 K/min, holding times of 2 h at 380 °C, of 1 h at 600 °C, of 30 min at 1100 °C and of 2 h at a final sintering temperature of 1380 °C. Five tensile tests were performed according to DIN EN ISO 22068; the results are shown in table 4.

**Table 4: Tensile tests 1-T to 5-T.**

| # | S₀ ^{[1]} [mm2] | E^{[2]} [GPa] | Rp_{0.2} ^{[3]} [MPa] | Rₘ ^{[4]} [MPa] | Fₘₐₓ ^{[5]} [kN] | A ^{[6]} [%] | A* ^{[7]} [%] | Z*^{[8]} [%] |
|---|---|---|---|---|---|---|---|---|
| 1-T | 20.4 | 105.7 | 227.3 | 556.3 | 11.4 | 45.9 | 46.4 | 35.4 |
| 2-T | 22.1 | 130.7 | 214.3 | 513.7 | 11.3 | 39.6 | 40.4 | 27.9 |
| 3-T | 20.0 | 127.7 | 237.4 | 573.5 | 11.5 | 50.4 | 50.0 | 43.4 |
| 4-T | 20.9 | 142.1 | 228.2 | 557.3 | 11.7 | 50.8 | 51.6 | 42.9 |
| 5-T | 21.2 | 147.0 | 213.6 | 535.8 | 11.4 | 50.3 | 51.2 | 36.3 |

| | | | | | | | | |
|---|---|---|---|---|---|---|---|---|
| [1] Cross-sectional area [2] E-modulus [3] Rp_{0.2} yield strength [4] Tensile strength [5] Maximum strength (global) [6] Elongation at break [7] Elongation at break (manually) [8] Fracture constriction (manually) | | | | | | | | |

## Claims

1. A particulate feedstock compound for use in a powder bed additive manufacturing process, comprising,
a) sinterable non-organic particles having a maximum particle size of 200 µm dispersed throughout the compound particle, and
b) a binder component, the binder component comprising, relative to the volume of the binder component
b-i) 3 to 70% by volume of a thermoplastic polyamide having a DSC melt peak temperature T_{P} below 140 °C, and
b-ii) 30 to 97% by volume of a wax or wax-type material having a drop point in the range of 20 to 160 °C.

2. The particulate feedstock compound of claim 1, wherein the thermoplastic polyamide has a DSC melt peak temperature T_{P} below 130 °C, preferably below 120 °C.

3. The particulate feedstock compound of claim 1 or 2, wherein the thermoplastic polyamide has a melt volume-flow rate of at least 1 cm³/10 min, according to ISO 1133 with 2.16 kg at 160 °C.

4. The particulate feedstock compound of any of the preceding claims,
wherein the wax or wax-type material is selected from polar waxes and polar wax-type materials.

5. The particulate feedstock compound of claim 4, wherein the wax or wax-type material is selected from aromatic esters and aromatic sulfonamides.

6. The particulate feedstock compound of any of the preceding claims,
wherein the binder component additionally comprises a plasticizer, preferably a plasticizer selected from aromatic esters and aromatic sulfonamides.

7. The particulate feedstock compound of any of the preceding claims,
wherein the binder component additionally comprises a dispersant.

8. The particulate feedstock compound of claim 7, wherein the dispersant is selected from fatty acids having 10 to 24 carbon atoms, preferably stearic acid.

9. The particulate feedstock compound of any of the preceding claims,
wherein the sinterable non-organic particles (a) are selected from metals, alloys, vitreous particles and ceramic particles.

10. The particulate feedstock compound of any of the preceding claims,
containing the sinterable non-organic particles (a) in an amount of 0.70 to 0.99 · φᵣ by volume, preferably 0.75 to 0.98 · φᵣ by volume, more preferably 0.80 to 0.96 · φᵣ by volume, most preferably 0.82 to 0.95 · φᵣ by volume, in particular 0.84 to 0.94 · φᵣ by volume, in particular 0.86 to 0.93 . φᵣ by volume, wherein φᵣ is the critical solids loading by volume.

11. The particulate feedstock compound of any one of claims 1 to 9, wherein the amount of
the sinterable non-organic particles a) is in the range of 20 to 90% by volume, preferably 30 to 80% by volume, more preferably 40 to 75% by volume, most preferably 45 to 70% by volume, in particular 50 to 65% by volume, and
the amount of the binder component b) is in the range of about 10 to 80% by volume, preferably 20 to 70% by volume, more preferably 25 to 60% by volume, most preferably 30 to 55% by volume, in particular 35 to 50% by volume.

12. The particulate feedstock compound of any of the preceding claims, having a particle size distribution such that at least 80% by volume of the particulate feedstock compound has a maximum particle size Bₘₐₓ in the range of 0.005 to 0.3 mm.

13. A process comprising the steps of:
- merging a plurality of the particulate feedstock compounds according to any one of claims 1 to 12 to obtain a green part,
- partially debinding the green part by selectively removing the wax or wax-type material b-ii) to obtain a brown part comprising the sinterable non-organic particles a) bound to each other by the thermoplastic polyamide b-i), and
- sintering the brown part to obtain a sintered part.

14. The process of claim 13, wherein the step of merging a plurality of the particulate feedstock compounds comprises the steps of:
- providing a first layer of feedstock compound particles;
- selectively densifying the first layer of feedstock compound particles to bind the compound particles to each other in a predefined manner so to produce a first shaped part layer;
- providing at least one further layer of feedstock compound particles on the first shaped part layer; and
- selectively densifying the further layer feedstock compound particles to bind the feedstock compound particles to each other in a predefined manner so to produce at least one further shaped part layer, the first shaped part layer and the further shaped part layers forming a green part.

15. The process of claim 14, wherein selectively densifying the first and further layer of compound particles involves selectively irradiating at least one of the first or the at least one further layer with electromagnetic radiation, preferably a laser beam.

16. A green part obtainable by merging a plurality of the particulate feedstock compounds according to any one of claims 1 to 12.

## Patentansprüche

1. Partikuläres Feedstock-Compound zur Verwendung in einem additiven Fertigungsverfahren im Pulverbett, umfassend,
a) über das Partikel dispergierte, sinterbare nicht-organische Partikel mit einer maximalen Partikelgröße von 200 µm, und
b) eine Binder-Komponente umfassend, bezogen auf das Volumen der Binder-Komponente
b-i) 3 bis 70 Vol.-% eines thermoplastischen Polyamids mit einer DSC-Schmelzpeaktemperatur T_{P} unter 140 °C, und
b-ii) 30 bis 97 Vol.-% eines Wachses oder wachsartigen Materials mit einem Tropfpunkt im Bereich von 20 bis 160 °C.

2. Partikuläres Feedstock-Compound nach Anspruch 1, wobei das thermoplastische Polyamid eine DSC-Schmelzpeaktemperatur T_{P} unter 130 °C, bevorzugt unter 120 °C aufweist.

3. Partikuläres Feedstock-Compound nach Anspruch 1 oder 2, wobei das thermoplastische Polyamid einen Schmelzflussindex von mindestens 1 cm³/10 min gemäß ISO 1133 mit 2,16 kg bei 160 °C aufweist.

4. Partikuläres Feedstock-Compound nach einem der vorhergehenden Ansprüche, wobei das Wachs oder wachsartige Material ausgewählt ist unter polaren Wachsen und polaren wachsartigen Materialien.

5. Partikuläres Feedstock-Compound nach Anspruch 4, wobei das Wachs oder wachsartige Material ausgewählt ist unter aromatischen Estern und aromatischen Sulfonamiden.

6. Partikuläres Feedstock-Compound nach einem der vorhergehenden Ansprüche, wobei die Binder-Komponente zusätzlich einen Weichmacher umfasst, bevorzugt einen Weichmacher ausgewählt unter aromatischen Estern und aromatischen Sulfonamiden.

7. Partikuläres Feedstock-Compound nach einem der vorhergehenden Ansprüche, wobei die Binder-Komponente zusätzlich ein Dispergiermittel enthält.

8. Partikuläres Feedstock-Compound nach Anspruch 7, wobei das Dispergiermittel ausgewählt ist unter Fettsäuren mit 10 bis 24 Kohlenstoffatomen, bevorzugt Stearinsäure.

9. Partikuläres Feedstock-Compound nach einem der vorhergehenden Ansprüche, wobei die sinterbaren nicht-organischen Partikel (a) ausgewählt sind unter Metallen, Legierungen, glasartigen Partikeln und Keramikpartikeln.

10. Partikuläres Feedstock-Compound nach einem der vorhergehenden Ansprüche, enthaltend die sinterbaren nicht-organischen Partikel (a) in einer Menge von 0,70 bis 0,99 · φᵣ nach Volumen, bevorzugt 0,75 bis 0,98 · φᵣ nach Volumen, stärker bevorzugt 0.80 bis 0,96 · φᵣ nach Volumen, am stärksten bevorzugt 0,82 bis 0,95 · φᵣ nach Volumen, insbesondere 0,84 bis 0,94 · φᵣ nach Volumen, insbesondere 0,86 bis 0,93 · φᵣ nach Volumen, wobei φᵣ für die kritische Feststoffbeladung nach Volumen steht.

11. Partikuläres Feedstock-Compound nach einem der Ansprüche 1 bis 9, wobei die Menge der sinterbaren nicht-organischen Partikel a) im Bereich von 20 bis 90 Vol.-%, bevorzugt 30 bis 80 Vol.-%, stärker bevorzugt 40 bis 75 Vol.-%, am stärksten bevorzugt 45 bis 70 Vol.-%, insbesondere 50 bis 65 Vol.-% liegt, und die Menge der Binder-Komponente b) im Bereich von 10 bis 80 Vol.-%, bevorzugt 20 bis 70 Vol.-%, stärker bevorzugt 25 bis 60 Vol.-%, am stärksten bevorzugt 30 bis 55 Vol.-%, insbesondere 35 bis 50 Vol.-% liegt.

12. Partikuläres Feedstock-Compound nach einem der vorhergehenden Ansprüche, mit einer Partikelgrößenverteilung, nach der mindestens 80 Vol.-% des partikulären Feedstock-Compounds eine maximale Partikelgröße Bₘₐₓ im Bereich von 0,005 bis 0,3 mm aufweisen.

13. Verfahren, umfassend die folgenden Schritte:
- Fusionieren einer Vielzahl von Feedstock-Compound-Partikeln nach einem der Ansprüche 1 bis 12, um ein Grünteil zu erhalten,
- teilweises Entbindern des Grünteils durch selektives Entfernen des Wachses oder des wachsartigen Materials b-ii), um ein durch das thermoplastische Polyamid b-i) aneinander gebundene, sinterbare nicht-organische Partikel a) enthaltendes Braunteil zu erhalten, und
- Sintern des Braunteils, um ein gesintertes Teil zu erhalten.

14. Verfahren nach Anspruch 13, wobei der Schritt des Fusionierens einer Vielzahl von Feedstock-Compound-Partikeln die folgenden Schritte umfasst:
- Bereitstellen einer ersten Schicht von Feedstock-Compound-Partikeln;
- selektives Verdichten der ersten Schicht von Feedstock-Compound-Partikeln, um die Compound-Partikel in einer vordefinierten Weise aneinander zu binden, um eine erste Formteilschicht herzustellen;
- Bereitstellen mindestens einer weiteren Schicht von Feedstock-Compound-Partikeln auf der ersten Formteilschicht; und
- selektives Verdichten der weiteren Schicht von Feedstock-Compound-Partikeln, um die Feedstock-Compound-Partikel in einer vordefinierten Weise aneinander zu binden, um mindestens eine weitere Formteilschicht herzustellen, wobei die erste Formteilschicht und die weiteren Formteilschichten ein Grünteil bilden.

15. Verfahren nach Anspruch 14, wobei das selektive Verdichten der ersten und weiteren Schicht von Compound-Partikeln selektives Bestrahlen mindestens einer der ersten oder mindestens einen weiteren Schicht mit elektromagnetischer Strahlung, bevorzugt einem Laserstrahl, umfasst.

16. Grünteil, erhältlich durch Fusionieren einer Vielzahl von Feedstock-Compound-Partikeln nach einem der Ansprüche 1 bis 12.

## Revendications

1. Composé particulaire de matière première pour utilisation dans un procédé de fabrication additive sur lit de poudre, comprenant,
a) des particules non organiques frittables ayant une taille particulaire maximum de 200 µm dispersées dans la totalité du composé particulaire, et
b) un composant liant, le composant liant comprenant, relativement au volume du composant liant
b-i) de 3 à 70 % en volume d'un polyamide thermoplastique ayant une température de pointe de fusion DSC T_{P} inférieure à 140 °C, et
b-ii) de 30 à 97 % en volume d'une cire ou d'un matériau de type cire ayant un point de goutte dans la plage de 20 à 160 °C.

2. Composé particulaire de matière première de la revendication 1, dans lequel le polyamide thermoplastique a une température de pointe de fusion DSC T_{P} inférieure à 130 °C, de préférence inférieure à 120 °C.

3. Composé particulaire de matière première de la revendication 1 ou 2, dans lequel le polyamide thermoplastique a un débit volumique à l'état fondu d'au moins 1 cm³/10 min, selon ISO 1133 avec 2,16 kg à 160 °C.

4. Composé particulaire de matière première de quelconques des revendications précédentes, dans lequel le matériau en cire ou de type cire est sélectionné parmi des cires polaires et des matériaux de type cire polaire.

5. Composé particulaire de matière première de la revendication 4, dans lequel la cire ou le matériau de type cire est sélectionné parmi des esters aromatiques et des sulfonamides aromatiques.

6. Composé particulaire de matière première de quelconques des revendications précédentes, dans lequel le composant liant comprend de plus un plastifiant, de préférence un plastifiant sélectionné parmi des esters aromatiques et des sulfonamides aromatiques.

7. Composé particulaire de matière première de quelconques des revendications précédentes, dans lequel le composant liant comprend de plus un dispersant.

8. Composé particulaire de matière première de la revendication 7, dans lequel le dispersant est sélectionné parmi des acides gras ayant de 10 à 24 atomes de carbone, de préférence de l'acide stéarique.

9. Composé particulaire de matière première de quelconques des revendications précédentes, dans lequel les particules non organiques frittables (a) sont sélectionnées parmi des métaux, des alliages, des particules vitreuses, et des particules céramiques.

10. Composé particulaire de matière première de quelconques des revendications précédentes, contenant les particules non organiques frittables (a) en une quantité de 0,70 à 0,99 · φᵣ en volume, de préférence de 0,75 à 0,98 · φᵣ en volume, de façon davantage préférée de 0,80 à 0,96 · φᵣ en volume, de façon préférée entre toutes de 0,82 à 0,95 · φᵣ en volume, en particulier de 0,84 à 0,94 · φᵣ en volume, en particulier de 0,86 à 0,93 · φᵣ en volume, dans lequel φᵣ est le chargement critique en matières solides en volume.

11. Composé particulaire de matière première de l'une quelconque des revendications 1 à 9, dans lequel la quantité des particules non organiques frittables a) est dans la plage de 20 à 90 % en volume, de préférence de 30 à 80 % en volume, de façon davantage préférée de 40 à 75 % en volume, de façon préférée entre toutes de 45 à 70 % en volume, en particulier de 50 à 65 % en volume, et
la quantité du composant liant b) est dans la plage d'environ 10 à 80 % en volume, de préférence de 20 à 70 % en volume, de façon davantage préférée de 25 à 60 % en volume, de façon préférée entre toutes de 30 à 55 % en volume, en particulier de 35 à 50 % en volume.

12. Composé particulaire de matière première de quelconques des revendications précédentes, ayant une distribution de taille particulaire telle qu'au moins 80 % en volume du composé particulaire de matière première a une taille particulaire maximum Bₘₐₓ dans la plage de 0,005 à 0,3 mm.

13. Procédé, comprenant les étapes de :
- le fusionnement d'une pluralité des composés particulaires de matière première selon l'une quelconque des revendications 1 à 12 pour obtenir une pièce verte,
- le déliage partiel de la pièce verte en éliminant sélectivement la cire ou le matériau de type cire b-ii) pour obtenir une pièce marron comprenant les particules non organiques frittables a) liées les unes aux autres par le polyamide thermoplastique b-i), et
- le frittage de la pièce marron pour obtenir une pièce frittée.

14. Procédé de la revendication 13, dans lequel l'étape du fusionnement d'une pluralité des composés particulaires de matière première comprend les étapes de :
- la fourniture d'une première couche de composés particulaires de matière première ;
- la densification sélective la première couche de composés particulaires de matière première pour lier les composés particulaires les uns aux autres de manière prédéfinie afin de produire une première couche de pièce façonnée ;
- la fourniture d'au moins une couche supplémentaire de composés particulaires de matière première sur la première couche de pièce façonnée ; et
- la densification sélective de la couche supplémentaire de composés particulaires de matière première pour lier les composés particulaires de matière première les uns aux autres de manière prédéfinie afin de produire au moins une couche supplémentaire de pièce façonnée, la première couche de pièce façonnée et les couches supplémentaires de pièce façonnée formant une pièce verte.

15. Procédé de la revendication 14, dans lequel la densification sélective de la première couche et de la couche supplémentaire de composés particulaires implique l'irradiation sélective d'au moins une de la première ou de l'au moins une couche supplémentaire avec un rayonnement électromagnétique, de préférence un faisceau laser.

16. Pièce verte pouvant être obtenue en fusionnant une pluralité des composés particulaires de matière première selon l'une quelconque des revendications 1 à 12.
